# EUROPÄISCHE PATENTSCHRIFT

(11) **EP 2 051 883 B1**
(45) Veröffentlichungstag und Bekanntmachung des Hinweises auf die Patenterteilung: **15.12.2010**
(21) Anmeldenummer: 07765387.1
(22) Anmeldetag: 13.06.2007
(51) Int. Cl.: B60S 1/38, B60S 1/40

(54) **WISCHBLATT**
WIPER BLADE
RACLETTE

(30) Priorität: 07.08.2006 DE 102006036777
(43) Veröffentlichungstag der Anmeldung: 29.04.2009
(73) Patentinhaber: Robert Bosch GmbH, 70442 Stuttgart (DE)
(72) Erfinder: BRAUN, Hans, 3300B Tienen (BE); DE BLOCK, Peter, 3545 Halen (BE); WINDMOLDERS, Eric, 3510 Kermt (BE); VAN VINCKENROYE, Liesbet, 3300 Tienen (BE); VERTONGEN, Robert, 3550 Heusden-Zolder (BE); LUYPAERTS, Edwin, 2490 Balen (BE); BEELEN, Hans, 3540 Herk de Stad (BE); BUBBA, Marcello, 3001 Heverlee (BE); FATAN, Bart, 3510 Kermt (BE); BRATEC, Hervé, 3012 Wilsele (BE); BONROY, Jan, 3001 Heverlee (BE)
(86) Internationale Anmeldenummer: PCT/EP2007/055803
(87) Internationale Veröffentlichungsnummer: WO 2008/017532

(56) Entgegenhaltungen:
- WO-A-00/48876
- WO-A-02/087935
- DE-A1- 10 036 115
- DE-A1- 10 038 397
- DE-U1-202005 012 619
- FR-A- 2 199 302
- FR-A- 2 851 976
- FR-A1- 2 868 376

## Beschreibung

### Stand der Technik

Die Erfindung geht von einem Wischblatt nach dem Oberbegriff des Anspruchs 1 aus.

Aus der gattungsgemäßen GB 1 212 131 ist ein Wischblatt bekannt, dessen Wischleiste mit einem integrierten Flansch in einem hinterschnittenen Kanal eines Wischleistenträgers aus Kunststoff geführt ist. Alternativ kann der Wischleistenträger aus Naturgummi, Federstahl, einem anderen flexiblen Material oder einer Kombination von diesen hergestellt sein; z.B. kann das plastische Material auf einer Verstärkung aus Federstahl gegossen sein. Der flexibel nachgiebige Wischleistenträger besitzt im unbelasteten Zustand eine zu einer Fahrzeugscheibe weisende konkave Krümmung, sodass er unter der Belastung durch einen Wischerarm mit einer geeigneten Kraftverteilung sicher gegen eine Fahrzeugscheibe gedrückt wird. Im mittleren Bereich des Wischleistenträgers ist ein integrales Anschlusselement angeformt, das zum gelenkigen Verbinden mit einem Wischarm dient. Ferner kann ein Teil des Wischleistenträgers als Spoiler ausgebildet sein.

Aus der DE 198 01 058 A1 ist ein Wischblatt mit einem Wischleistenträger aus Kunststoff bekannt, der zu einer Wischleiste hin zwei einander gegenüberliegende, in Längsrichtung verlaufende Halteschienen aufweist. Diese bilden zwischen sich einen im Querschnitt etwa rechteckigen Zwischenraum mit einem Längsspalt. Der Zwischenraum nimmt mit geringem Spiel eine Rückenleiste einer Wischleiste auf. Das geringe Spiel erleichtert die Montage und begünstigt das Umlegeverhalten der Wischlippe in den Umkehrlagen des Wischblatts. Bei einer Ausführung ist in einem zentralen Hohlprofil oberhalb der Halteschienen eine Federschiene aus Metall als Tragelement angeordnet. Sie kann durch Krallen und Endklippse in dem Längskanal gehalten werden. Um die Federeigenschaften der Federschiene durch den Wischleistenträger möglichst wenig zu beeinflussen, sind in den Halteschienen und/oder dem Hohlprofil für die Federleiste Querschlitze vorgesehen.

Damit bei problematischen Scheibenanordnungen und hohen Fahrgeschwindigkeiten eine ordnungsgemäße Anlage der Wischleiste an der Scheibe sichergestellt ist, ist mit dem Wischleistenträger ein Spoiler in Form einer Windabweisleiste verbunden. Dieser ist einwandig an dem Träger stehend oder hängend angeformt. Bei einer weiteren Ausführungsform ist eine Umhüllungswand, die der Fahrzeugscheibe zugewandt ist, durchgehend und als Zusatzfederschiene ausgeführt. Sie ist so verdickt oder auf sonstige Weise verstärkt, dass ihre Steifigkeit gröβer ist als die der anderen Umhüllungswände. Die Umhüllung aus Kunststoff besitzt in Bezug auf die Fahrzeugscheibe positive und negative Krümmungen, während die Federschiene aus Metall lediglich positiv gekrümmt ist. Wenn nun die Federschiene aus Metall in die vorgeformte Umhüllung aus Kunststoff eingeführt wird, überlagern sich die Federeigenschaften des gesamten Tragelements, sodass sich die gewünschten modifizierten Federeigenschaften ergeben. Je nach Ausführungsform ist entweder an dem Träger oder an der Federschiene ein Anschlusselement befestigt, mit deren Hilfe das Wischblatt an einem Wischarm gelenkig angeschlossen werden kann.

Ferner ist aus der DE 101 20 467 A1 ein Wischblatt mit einer Wischleiste bekannt, dessen Kopfleiste zwei seitliche Längsnuten aufweist. Diese dienen zur Aufnahme zweier Federschienen, die als Tragelemente dienen, und auf denen ein Spoiler mit Führungsnuten befestigt ist. Der Spoiler hat zwei aus verschiedenen Materialien bestehende Längsbereiche, und zwar ist der Längsbereich, welcher die hauptsächlichen Aufgaben des Spoilers mit der Anströmfläche übernimmt, aus einem weicheren Material gefertigt als der Längsbereich, der als Grundkörper dient und mit den Führungsschienen die äußeren Teile der Federschienen umfasst. Bei einer anderen Ausführungsform besitzt der als Grundkörper dienende Längsbereich einen zentralen Längskanal für eine einzige Federschiene. Dabei ist die Wischleiste an der zur Fahrzeugscheibe weisenden Seite des Grundkörpers anextrudiert. Da der Zweistoffspoiler mit der Wischleiste über seiner gesamten Länge ein gleich bleibendes Profil besitzt, kann er kostengünstig mit dem so genannten Mehrstoff-Extrusionsverfahren hergestellt werden.

Außerdem ist aus der FR 2 868 376 A1 ein Wischblatt mit einem Wischleistenträger bekannt, wobei eine Umhüllung für eine Federschiene, ein Spoiler und längs verlaufende Führungsschienen für die Wischleiste ein einteiliges Bauelement aus Kunststoff bilden. Im mittleren Bereich des Wischblatts ist eine Aussparung im Spoiler vorgesehen, um ein auswechselbareres Anschlusselement vorzusehen.

Schließlich ist aus der DE 103 12 979 A1 ein Wischblatt mit einer Wischleiste bekannt, an dessen Kopfleiste ein Spoiler befestigt ist. Der Spoiler besitzt im Querschnitt ein Tragflügelprofil, dessen konvex gekrümmte Oberfläche der Wischleiste zugewandt und über Stützen mit Krallen oder einer Schwalbenschwanzverbindung mit der Kopfleiste der Wischleiste verbunden ist. Die Zwischenräume zwischen den Stützen bilden Durchströmöffnungen, die sich von einer Engstelle aus in Strömungsrichtung vergrößern. Das Wischblatt besitzt ein als Federschiene ausgebildetes Tragelement, das in einem rundum geschlossenen Längskanal der Kopfleiste oder des Tragflügelprofils angeordnet ist.

### Offenbarung der Erfindung

Nach der Erfindung hat der Wischleistenträger ein im Querschnitt im Wesentlichen rechteckiges Hohlprofil mit einem zur Wischleiste weisenden Längsschlitz zur Aufnahme einer Rückenleiste der Wischleiste. Im Bereich des Anschlusselements besitzt der Wischleistenträger auf seiner dem Anschlusselement gegenüberliegenden Seite Aussparungen, die hinterschnittene Längsflanken aufweisen, die zu hinterschnittenen Längsflanken einer zugeordneten Längsnut des Anschlusselements passen. Die hinterschnittenen Längsflanken des Wischleistenträgers und des Anschlusselements können in Form einer Schwalbenschwanzverbindung gestaltet sein, sodass das Anschlusselement leicht zu montieren ist, indem es auf den Wischleistenträger aufgeklippst wird. Ferner kann der Wischleistenträger mit Anschlusselementen kombiniert werden, die mit verschiedenen Anschlussmöglichkeiten für eine gelenkige Verbindung mit unterschiedlichen Wischarmen ausgebildet sind.

Der Wischleistenträger kann außerdem einen Spoiler und/oder Endkappen besitzen. Gemäß einer nicht beanspruchten Ausgestaltung der Erfindung ist es vorteilhaft, dass auf der Seite des Wischleistenträgers, die dem Anschlusselement zugewandt ist, im Abstand voneinander Stützen angespritzt sind, die ein angespritztes, schalenförmiges Spoilerprofil tragen, wobei der Wischleistenträger und die Stützen aus einem härteren Kunststoff bestehen als das Spoilerprofil. Durch die Stützen und das vorzugsweise gummielastische Spoilerprofil wird eine große Flexibilität des Wischleistenträgers erreicht. Ferner bilden der Wischleistenträger mit dem Führungsschlitz zur Aufnahme der Wischleiste und die Stützen mit dem Spoilerprofil ein Spritzgussteil, sodass sich für das gesamte Wischblatt nur wenige Einzelteile ergeben. Dieser Umstand kann dadurch verbessert werden, dass das Anschlusselement und/oder die Wischleiste ebenfalls an den Wischleistenträger angespritzt sind.

Bei einer anderen Ausführungsform der Erfindung ist der Wischleistenträger längs geteilt, wobei die Teile auf der der Wischleiste zugewandten Längsseite jeweils eine Leiste aufweisen, die in Längsnuten zwischen einer Rückenleiste und dem übrigen Teil einer Kopfleiste der Wischleiste eingreift. Auf der dem Anschlusselement zugewandten Seite sind zu beiden Seiten der Rückleiste Längsnuten mit hinterschnittenen Flanken vorgesehen, die zu Stegen mit hinterschnittenen Flanken an dem Anschlusselement passen. Das Anschlusselement, das die Teile des Wischleistenträgers brückenartig verbindet, kann in Längsrichtung auf den Wischleistenträger geschoben oder quer zur Längsrichtung aufgeklippst werden. Die hinterschnittenen Flanken der Längsnuten und der Stege werden vorzugsweise als Schwalbenschwanzverbindung gestaltet. Gegebenenfalls kann in gleicher Weise ein Spoiler am Wischleistenträger befestigt werden, wobei der Spoiler ein Spoilerprofil und eine angeformte Grundplatte aufweist, die Längsstege mit hinterschnittenen Flanken besitzt. Sowohl der Wischleistenträger als auch der Spoiler können in einem Extrusionsverfahren hergestellt werden, während das Anschlusselement und gegebenenfalls eine Endkappe im Spritzgießverfahren gefertigt werden. Dabei ist es zweckmäßig, dass die Grundplatte aus einem steiferen Werkstoff besteht als das anextrudierte Spoilerprofil, das weicher, flexibler und gummielastisch ist. Bei dieser Ausführungsform ergibt sich durch die Schwalbenschwanzverbindungen eine einfache Montage. Ferner sind die extrudierten Teile kostengünstig herzustellen. Außerdem können Anschlusselemente mit verschiedenen Anschlussmöglichkeiten für unterschiedliche Wischerarme verwendet werden.

Bei einer weiteren nicht beanspruchten Ausgestaltung der Erfindung weist der Wischleistenträger einen in Längsrichtung verlaufenden Tragbalken auf, an dem auf der der Rückenleiste der Wischleiste zugewandten Seite eine erste Führungsleiste angeformt ist, die mit einer parallel verlaufenden zweiten Führungsleiste einen Längsspalt bildet. In diesen Längsspalt wird ein Steg der Wischleiste eingefädelt, der zwischen der Rückenleiste und dem übrigen Teil der Kopfleiste vorgesehen ist. Die zweite Führungsleiste wird von Stützen gehalten, die in Längsrichtung des Wischblatts im Abstand zueinander angeordnet und sowohl am Tragbalken als auch an der zweiten Führungsleiste angespritzt sind. Somit überbrücken die Stützen den Längsspalt. Sie tragen auf der dem Längsspalt abgewandten Seite ein angespritztes Spoilerprofil. Der Wischleistenträger mit dem Führungsspalt für die Wischleiste und den Spoiler bilden nur ein Spritzgussteil, wobei zweckmäßigerweise der Tragbalken, die Führungsschienen und die Stützen aus einem härteren Material bestehen als das Spoilerprofil, das zweckmäßigerweise aus einem gummielastischen Werkstoff besteht. Um die Strömungsverhältnisse des Fahrtwinds am Wischblatt günstig zu gestalten, ist es zweckmäßig, dass zwischen dem Spoilerprofil, dem Tragbalken und den Stützen Öffnungen vorgesehen sind, die sich in Längsrichtung der Stützen ausgehend vom Tragbalken erweitern. Dabei können die Stützen quer zum Tragbalken angeordnet werden oder geneigt zu dessen Längsachse verlaufen, sodass sie im Wesentlichen in Richtung des Fahrtwindes weisen, wenn das Wischblatt bei einer Schwenkbewegung über eine Fahrzeugscheibe eine mittlere Schwenkposition einnimmt. Die Flexibilität des Wischleistenträgers kann durch eine zusätzliche, flache Federschiene modifiziert werden, die zweckmäßigerweise von den Stützen getragen wird und die Öffnungen unterteilt. Dabei kann sie als Leitfläche für den durch die Öffnung strömenden Fahrtwind dienen, wodurch die Strömungsverhältnisse am Wischblatt günstig beeinflusst werden.

Nach einer weiteren nicht beanspruchten Ausgestaltung der Erfindung weist der Wischleistenträger eine flache Federleiste auf, die im mittleren Bereich ein angespritztes Anschlusselement hat. An den längeren Seiten sind in einer Längsmittelebene Befestigungsprofile angespritzt. In vorteilhafter Weise haben diese einen T-förmigen Querschnitt. Sie sind spiegelbildlich zur Federleiste angeordnet und mit ihren senkrechten Schenkeln einstückig mit dieser verbunden.

### Kurze Beschreibung der Zeichnungen

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

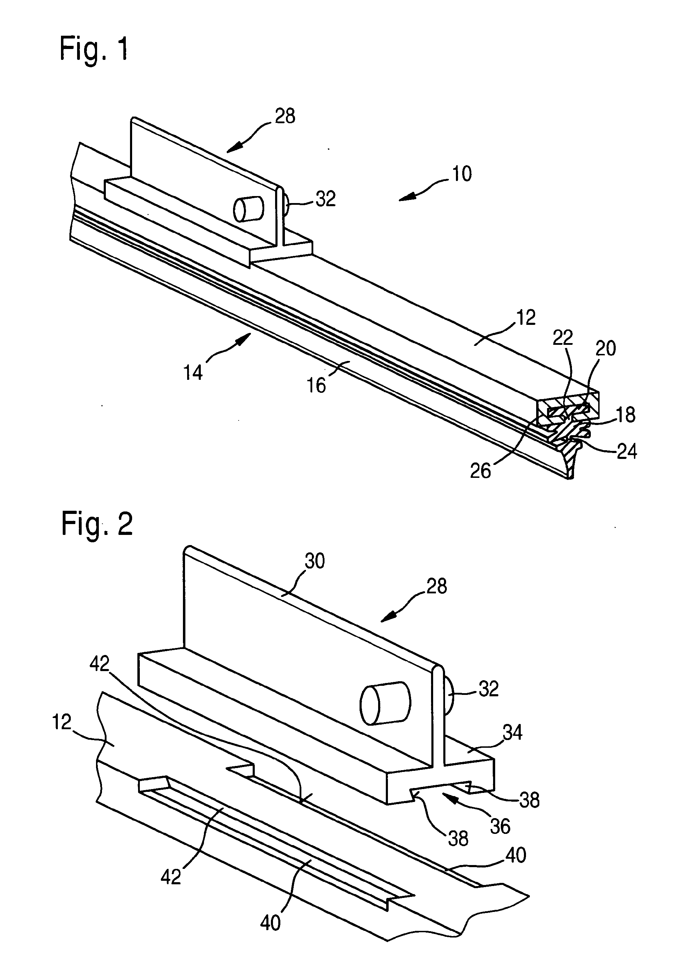

- Fig. 1: eine perspektivische Teilansicht eines erfindungsgemä- ßen Wischblatts,
- Fig. 2: eine vergrößerte Ansicht im Bereich eines Anschluss- elements nach Fig. 1 in einer Explosionsdarstellung,
- Fig. 3: eine perspektivische Teilansicht eines Wischblatts nach Fig. 1 mit einem Spoiler,
- Fig. 4: und Fig. 5 Varianten zur Fig. 3,
- Fig. 6: einen perspektivischen Teilschnitt entsprechend der Linie VI-VI in Fig. 5,
- Fig. 7: eine perspektivische Teilansicht eines Endes eines Wischblatts nach Fig. 5 ohne Endkappe,
- Fig. 8: eine perspektivische Teilansicht einer Variante nach Fig. 3,
- Fig. 9: einen Wischleistenträger nach Fig. 8,
- Fig. 10: eine Variante zu Fig. 9 und
- Fig. 11: eine Variante zu einem Wischleistenträger nach Fig. 1.

### Ausführungsformen der Erfindung

Ein Wischblatt 10 ist im Wesentlichen aus einem Wischleistenträger 12, einer Wischleiste 14 und einem Anschlusselement 28 aufgebaut. Die Wischleiste 14 besitzt eine Wischlippe 16, die über einen Kippsteg 24 mit einer Kopfleiste 18 verbunden ist. Diese besitzt zwei Längsnuten, die einen Steg 22 bilden, über den eine Rückenleiste 20 mit dem übrigen Teil der Kopfleiste 18 verbunden ist. Der Wischleistenträger 12 besitzt ein Hohlprofil 26, das zur Wischleiste 14 einen Längsschlitz zur Aufnahme des Stegs 22 hat. Bei der Montage wird die Wischleiste 14 mit ihrer Rückenleiste 20 stirnseitig in das Hohlprofil 26 eingeschoben, sodass der Steg 22 in dem Längsschlitz des Hohlprofils geführt ist.

Im mittleren Bereich des Wischleistenträgers sind an den Längskanten, die dem Anschlusselement 28 zugewandt sind Aussparungen 40 vorgesehen, die hinterschnittene Längsflanken 42 haben. Diese passen zu hinterschnittenen Längsflanken 38 einer Längsnut 36 in einer Bodenplatte 34 des Anschlusselements 28. Die hinterschnittenen Längsflanken 42 der Aussparungen 40 und der Längsflanken 38 der Längsnut 36 bilden eine Schwalbenschwanzverbindung, sodass das Anschlusselement 28 quer zur Längsrichtung des Wischleistenträgers 12 auf diesen aufgeklippst werden kann. Das Anschlusselement besitzt auf der Seite, die der Längsnut 36 abgewandt ist, einen senkrechten Mittelsteg 30, der ein Gelenkelement 32 besitzt, z.B. einen Gelenkbolzen oder eine Gelenknabe, mit dem das Wischblatt 10 mit einem nicht dargestellten Wischerarm gelenkig verbunden wird. Außer der Grundplatte 34 kann das Anschlusselement 28 in seiner Gestalt vielfach modifiziert werden, damit es zu allen Anschlussvarianten unterschiedlicher Wischerarme passt.

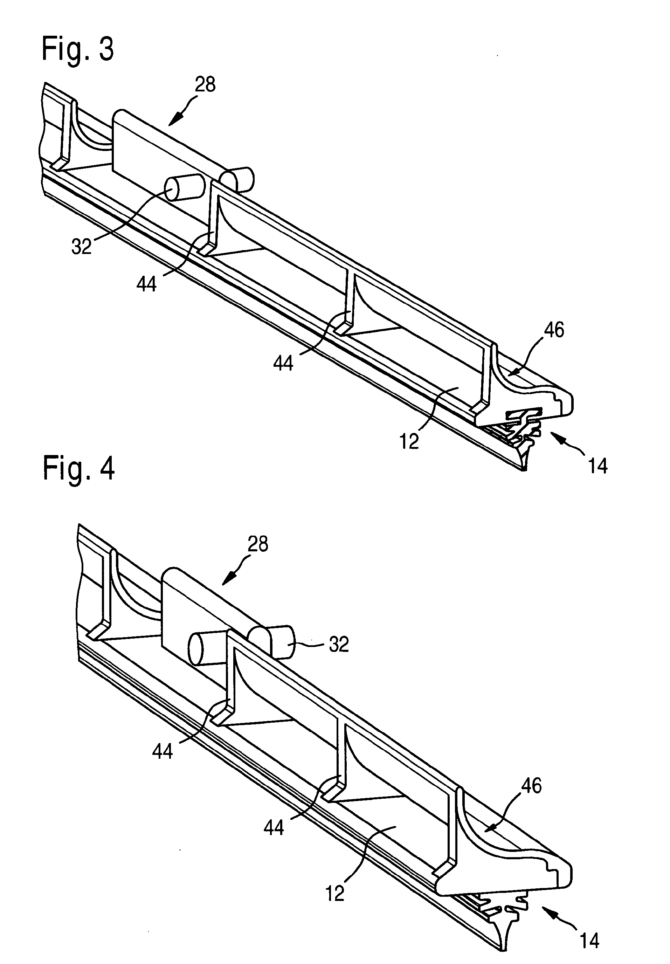

Der Wischleistenträger 12 kann mit oder ohne Spoiler verwendet werden. Fig. 3 zeigt eine Ausführung mit Spoiler, bei der ein Spoilerprofil 46 über Stützen 54 einstückig mit der Oberseite des Wischleistenträgers 12 verbunden ist. Dabei wird das Bauteil bestehend aus dem Wischleistenträger 12, den Stützen 44 und dem Spoilerprofil in einem Spritzgussgießverfahren hergestellt, wobei das Spoilerprofil 46 zweckmäßigerweise aus einem gummielastischen Werkstoff besteht, während der Wischleistenträger 12 mit den Stützen 44 aus einem steiferen Kunststoff besteht. Durch die mit Abstand zueinander angeordneten Stützen 44 und das gummielastische Spoilerprofil 46 ergibt sich eine gute Biegsamkeit des Wischleistenträgers 12. Die Anzahl der für ein Wischblatt 10 erforderlichen Bauteile kann weiter reduziert werden, indem das Anschlusselement 28 an den Wischleistenträger angespritzt wird. Ferner kann die Wischleiste 14 an die Unterseite des Wischleistenträgers angespritzt werden, wobei der Längsschlitz im Hohlprofil 26 des Wischleistenträgers 12 entfällt.

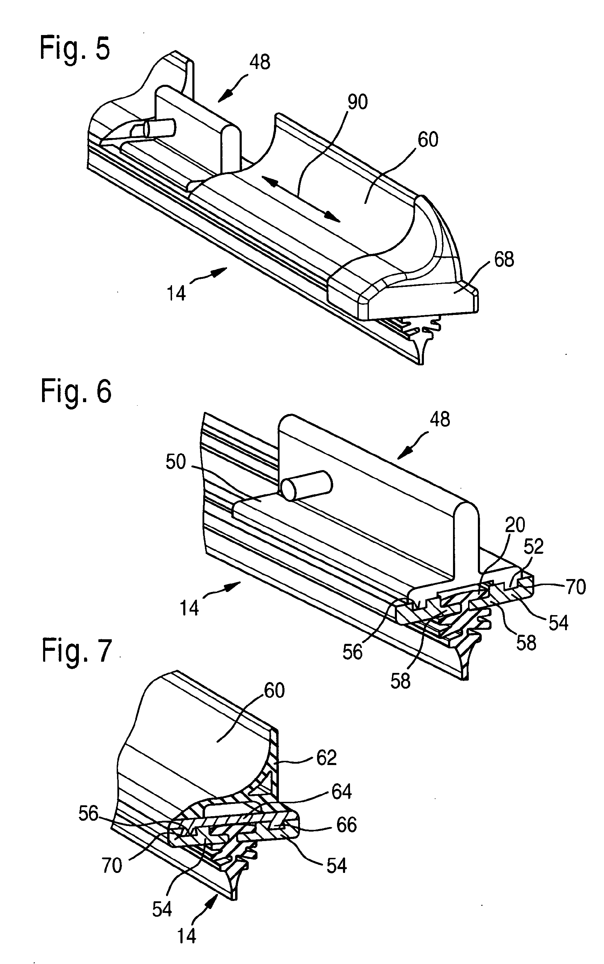

Die Fig. 5 bis 7 zeigen einen längs geteilten Wischleistenträger 54, dessen Teile jeweils an ihrer der Wischleiste zugewandten Längsseite eine Leiste 58 aufweisen, die in die Längsnuten zwischen der Rückenleiste 20 und dem übrigen Teil der Kopfleiste 18 eingreifen. Die seitlich aus den Längsnuten vorstehenden Teile des Wischleistenträgers besitzen an der Seite, die einem Anschlusselement 48 bzw. einem Spoiler 60 zugewandt sind, Längsnuten 56 mit hinterschnittenen Seitenflanken 70, in die Längsstege 52 an einer Bodenplatte 50 des Anschlusselements 48 eingreifen. Die Längsstege 52 besitzen ebenfalls hinterschnittene Seitenflanken, sodass sie mit dem hinterschnittenen Seitenflanken 70 der Längsnuten 56 im montierten Zustand eine Schwalbenschwanzverbindung bilden. Das Anschlusselement überbrückt die Rückenleiste 20 der Wischleiste 14 und hält die Teile des Wischleistenträgers 54 zusammen. In gleicher Weise ist der Spoiler mit dem Wischleistenträger 54 verbunden, indem Längsstege 66 mit hinterschnittenen Flanken in die Längsnuten 56 eingreifen. Der Spoiler 60 besteht aus einem Spoilerprofil 62 und einer Grundplatte 64 mit den Stegen 66, wobei die Grundplatte 64 aus einem gleichen oder ähnlichen Werkstoff wie der Wischleistenträger 54 besteht, während der Werkstoff des Spoilerprofils 62 weicher ist. Das Anschlusselement 48 und der Spoiler 60 können quer zu einer Längsrichtung 90 aufgeklippst oder von einem Ende auf den Wischleistenträger 54 geschoben werden. Die Enden des Spoilers des Wischleistenträgers sind jeweils durch eine Endkappe 68 abgedeckt. Der Spoiler 60 und der Wischleistenträger 54 sind im Extrusionsverfahren hergestellt, während das Anschlusselement 48 und die Endkappe 68 in einem Spritzgussverfahren gefertigt sind.

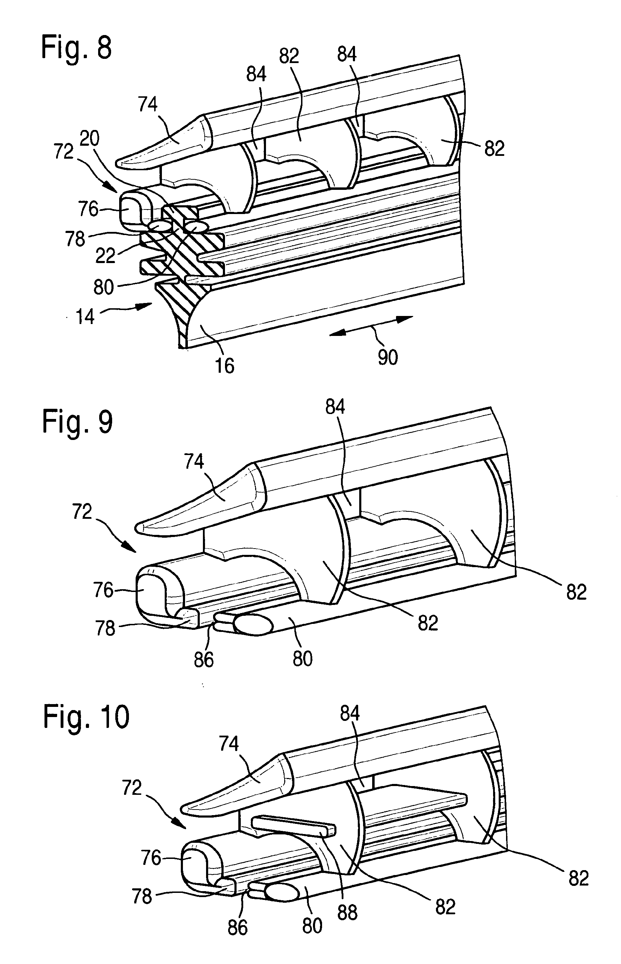

Der Wischleistenträger 74 nach Fig. 8 bis Fig. 10 besitzt einen Tragbalken 76, der sich in Längsrichtung 90 erstreckt und an dem zur Wischleiste 14 hin eine erste Führungsschiene 78 angeformt ist. Diese bildet mit einer zweiten Führungsschiene 80 einen Spalt 86 zur Aufnahme des Stegs 22, der die Rückenleiste 20 der Wischleiste 14 mit dem übrigen Teil der Kopfleiste 18 verbindet. Die zweite Führungsschiene 80 ist mit dem Tragbalken 76 durch Stützen 82 einstückig verbunden, die den Spalt 86 überbrücken und mit den Führungsschienen 78, 80 sowie einem Spoilerprofil 74 eine Baueinheit bilden. Dabei liegt die Anströmkante des Spoilerprofils 74 auf der Seite des Tragbalkens 76 und die Abströmkante auf der Seite der zweiten Führungsschiene 80. Zwischen dem Tragbalken 76, dem Spoilerprofil 74 und den Stützen 82 befinden sich Öffnungen 84, durch die der Fahrtwind strömen kann, um die Strömungsverhältnisse an dem Wischblatt 10 zu verbessern. Bei der Ausführung nach der Fig. 10 ist eine zusätzlich flache Metallfederschiene 88 vorgesehen, die von den Stützen 82 getragen wird und die Öffnungen 84 unterteilt. Sie wirkt gleichzeitig als Leitfläche für die durchströmende Luft, wodurch die Strömungsverhältnisse am Wischblatt 10 optimiert werden können.

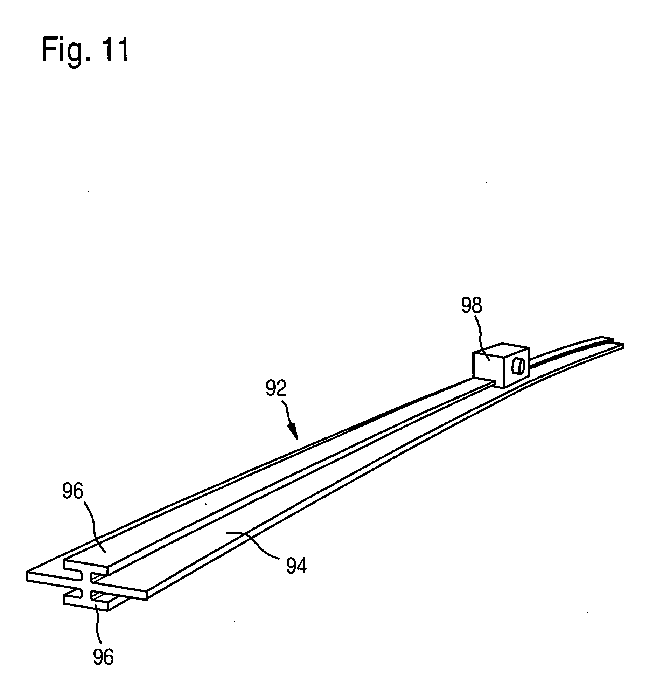

Der Wischleistenträger 92 nach Fig. 11 umfasst eine flache Federleiste 94 mit einem angespritzten Anschlusselement 98 und Befestigungsprofilen 96. Diese weisen im Querschnitt ein T-förmiges Profil auf, wobei der senkrechte Steg spiegelbildlich zur Federleiste 94 in einer Längsmittelebene einstückig mit dieser verbunden ist.

## Patentansprüche

1. Wischblatt (10) mit mindestens einer Wischleiste (14) und einem elastisch nachgiebigen Wischleistenträger (12, 54) insbesondere aus Kunststoff, der im unbelasteten Zustand zur Wischleiste (14) hin eine konkave Krümmung, Haltemittel (26, 58, 78 und 80, 96) für die Wischleiste (14) und ein im Querschnitt im Wesentlichen rechteckiges Hohlprofil (26) mit einem zur Wischleiste (14) weisenden Längsschlitz zur Aufnahme einer Rückenleiste (20) der Wischleiste (14) hat, wobei im mittleren Bereich des Wischleistenträgers (12, 54) ein Anschlusselement (28, 48) vorgesehen ist, **dadurch gekennzeichnet, dass** der Wischleistenträger (12) im Bereich des Anschlusselements (28) auf seiner dem Anschlusselement (28) gegenüberliegenden Seite Aussparungen (40) besitzt, die hinterschnittene Längsflanken (42) aufweisen, die zu hinterschnittenen Längsflanken (38) einer zugeordneten Längsnut 36) des Anschlusselements (28) passen.

2. Wischblatt (10) mit mindestens einer Wischleiste (14) und einem elastisch nachgiebigen Wischleistenträger (12, 54, 72, 92) insbesondere aus Kunststoff, der im unbelasteten Zustand zur Wischleiste (14) hin eine konkave Krümmung und Haltemittel (26, 58, 78 und 80, 96) für die Wischleiste (14) aufweist, wobei im mittleren Bereich des Wischleistenträgers (12, 54, 72, 92) ein Anschlusselement (28, 48, 98) vorgesehen ist, **dadurch gekennzeichnet, dass** der Wischleistenträger (54) längs geteilt ist, wobei die Teile auf der der Wischleiste (14) zugewandten Längsseite jeweils eine Leiste (58) aufweisen, die in Längsnuten zwischen einer Rückenleiste (20) und dem übrigen Teil einer Kopfleiste (18) der Wischleiste (14) eingreifen, und auf der dem Anschlusselement (48) zugewandten Seite zu beiden Seiten der Rückenleiste (20) Längsnuten (56) mit hinterschnittenen Flanken versehen sind, die zu Stegen (52) mit hinterschnittenen Flanken an dem Anschlusselement (48) passen, und das Anschlusselement (48) die Teile des Wischleistenträgers (54) brückenartig verbindet.

3. Wischblatt (10) nach Anspruch 2, **dadurch gekennzeichnet, dass** der Wischleistenträger (54) längs geteilt ist, wobei die Teile auf der der Wischleiste (14) zugewandten Längsseite jeweils eine Leiste (58) aufweisen, die in Längsnuten zwischen einer Rückenleiste (20) und dem übrigen Teil einer Kopfleiste (18) der Wischleiste (14) eingreifen, und auf der dem Anschlusselement (48) zugewandten Seite zu beiden Seiten der Rückenleiste (20) Längsnuten (56) mit hinterschnittenen Flanken versehen sind, die zu Stegen (66) mit hinterschnittenen Flanken an einem Spoiler (60) passen.

4. Wischblatt (10) nach Anspruch 3, **dadurch gekennzeichnet, dass** der Spoiler (60) aus einem Spoilerprofil (62) und einer Grundplatte (64) mit den Stegen (66) besteht, wobei die Grundplatte (64) aus einem gleichen oder ähnlichen Werkstoff besteht wie der Wischleistenträger (54), während der Werkstoff des Spoilerprofils (62) weicher ist.

## Claims

1. Wiper blade (10) with at least one wiper strip (14) and an elastically flexible wiper strip support (12, 54), in particular made of plastic, which, in the unloaded state, has a concave curvature towards the wiper strip (14), holding means (26, 58, 78 and 80, 96) for the wiper strip (14) and a hollow profile (26) which is substantially reactangular in cross section and has a longitudinal slot facing the wiper strip (14) for receiving a back strip (20) of the wiper strip (14), wherein a connecting element (28, 48) is provided in the central region of the wiper strip support (12, 54), **characterized in that**, in the region of the connecting element (28), the wiper strip support (12) has cutouts (40) on the side thereof opposite the connecting element (28), said cutouts having undercut longitudinal flanks (42) which match undercut longitudinal flanks (38) of an associated longitudinal groove (36) of the connecting element (28).

2. Wiper blade (10) with at least one wiper strip (14) and an elastically flexible wiper strip support (12, 54, 72, 92), in particular made of plastic, which, in the unloaded state, has a concave curvature towards the wiper strip (14) and holding means (26, 58, 78 and 80, 96) for the wiper strip (14), wherein a connecting element (28, 48, 98) is provided in the central region of the wiper strip support (12, 54, 72, 92), **characterized in that** the wiper strip support (54) is divided longitudinally, the parts of the longitudinal side facing the wiper strip (14) each having a strip (58) engaging in longitudinal grooves between a back strip (20) and the remaining part of a head strip (18) of the wiper strip (14), and, on the side facing the connecting element (48), longitudinal grooves (56) having undercut flanks being provided on both sides of the back strip (20), said longitudinal grooves matching webs (52) having undercut flanks on the connecting element (48), and the connecting element (48) connecting the parts of the wiper strip support (54) in the manner of a bridge.

3. Wiper blade (10) according to Claim 2, **characterized in that** the wiper strip support (54) is divided longitudinally, the parts of the longitudinal side facing the wiper strip (14) each having a strip (58) engaging in longitudinal grooves between a back strip (20) and the remaining part of a head strip (18) of the wiper strip (14), and, on the side facing the connecting element (48), longitudinal grooves (56) having undercut flanks being provided on both sides of the back strip (20), said longitudinal grooves matching webs (66) having undercut flanks on a spoiler (60).

4. Wiper blade (10) according to Claim 3, **characterized in that** the spoiler (60) consists of a spoiler profile (62) and a baseplate (64) with the webs (66), the baseplate (64) being composed of an identical or similar material to the wiper strip support (54) while the material of the spoiler profile (62) is softer.

## Revendications

1. Balai d'essuie-glace (10) comprenant au moins une raclette d'essuie-glace (14) et un support de raclette d'essuie-glace flexible élastiquement (12, 54), en particulier en plastique, qui, dans l'état non sollicité présente une courbure concave par rapport à la raclette d'essuie-glace (14), des moyens de retenue (26, 58, 78 et 80, 96) pour la raclette d'essuie-glace (14) et un profilé creux de section transversale essentiellement rectangulaire (26) avec une fente longitudinale tournée vers la raclette d'essuie-glace (14), pour recevoir une raclette arrière (20) de la raclette d'essuie-glace (14), un élément de raccordement (28, 48) étant prévu dans la région centrale du support de raclette d'essuie-glace (12, 54), **caractérisé en ce que** le support de raclette d'essuie-glace (12), dans la région de l'élément de raccordement (28), possède, sur son côté opposé à l'élément de raccordement (28), des évidements (40) qui présentent des flancs longitudinaux (42) en contredépouille, qui s'adaptent à des flancs longitudinaux (38) en contredépouille d'une rainure longitudinale associée (36) de l'élément de raccordement (28).

2. Balai d'essuie-glace (10) comprenant au moins une raclette d'essuie-glace (14) et un support de raclette d'essuie-glace flexible élastiquement (12, 54, 72, 92), en particulier en plastique, qui, dans l'état non sollicité, présente une courbure concave par rapport à la raclette d'essuie-glace (14) et des moyens de retenue (26, 58, 78 et 80, 96) pour la raclette d'essuie-glace (14), un élément de raccordement (28, 48, 98) étant prévu dans la région centrale du support de raclette d'essuie-glace (12, 54, 72, 92) , **caractérisé en ce que** le support de raclette d'essuie-glace (54) est divisé en longueur, les parties du côté longitudinal tourné vers la raclette d'essuie-glace (14) présentant chacune une raclette (58), qui vient en prise dans des rainures longitudinales entre une raclette arrière (20) et la partie restante d'une raclette de tête (18) de la raclette d'essuie-glace (14), et des rainures longitudinales (56) avec des flancs en contredépouille étant prévues sur le côté tourné vers l'élément de raccordement (48) des deux côtés de la raclette arrière (20), lesquels flancs sont adaptés à des nervures (52) avec des flancs en contredépouille sur l'élément de raccordement (48), et l'élément de raccordement (48) reliant en forme de pont les parties du support de raclette d'essuie-glace (54).

3. Balai d'essuie-glace (10) selon la revendication 2, **caractérisé en ce que** le support de raclette d'essuie-glace (54) est divisé en longueur, les parties du côté longitudinal tourné vers la raclette d'essuie-glace (14) présentant chacune une raclette (58), qui vient en prise dans des rainures longitudinales entre une raclette arrière (20) et la partie restante d'une raclette de tête (18) de la raclette d'essuie-glace (14), et des rainures longitudinales (56) avec des flancs en contredépouille étant prévues sur le côté tourné vers l'élément de raccordement (48) des deux côtés de la raclette arrière (20), lesquels flancs sont adaptés à des nervures (66) avec des flancs en contredépouille sur un déflecteur (60).

4. Balai d'essuie-glace (10) selon la revendication 3, **caractérisé en ce que** le déflecteur (60) se compose d'un profilé de déflecteur (62) et d'une plaque de base (64) avec les nervures (66), la plaque de base (64) se composant d'un matériau identique ou similaire à celui du support de raclette d'essuie-glace (54), tandis que le matériau du profilé de déflecteur (62) est plus tendre.
